# EUROPÄISCHE PATENTSCHRIFT

(11) **EP 4 004 408 B1**
(45) Veröffentlichungstag und Bekanntmachung des Hinweises auf die Patenterteilung: **13.03.2024**
(21) Anmeldenummer: 20750190.9
(22) Anmeldetag: 22.07.2020
(51) Int. Cl.: F16H 63/36, F16H 61/00, F16H 61/12, F16H 61/16, F16H 61/32, F16H 61/682

(54) **ANORDNUNG ZUM SCHALTEN EINES GETRIEBES UND VERFAHREN ZUM BETRIEB DER ANORDNUNG**
ASSEMBLY FOR SHIFTING A TRANSMISSION AND METHOD FOR OPERATING THE ASSEMBLY
ENSEMBLE POUR CHANGER UNE TRANSMISSION ET PROCÉDÉ DE FONCTIONNEMENT DE L'ENSEMBLE

(30) Priorität: 30.07.2019 DE 102019211378
(43) Veröffentlichungstag der Anmeldung: 01.06.2022
(73) Patentinhaber: Vitesco Technologies Germany GmbH, 93055 Regensburg (DE)
(72) Erfinder: LEIPNITZ, Klaus, 81737 München (DE)
(74) Vertreter: Vitesco Technologies
(86) Internationale Anmeldenummer: PCT/EP2020/070726
(87) Internationale Veröffentlichungsnummer: WO 2021/018701

(56) Entgegenhaltungen:
- DE-A1-102008 000 640
- FR-A1- 3 019 613
- US-A- 3 652 901
- US-A1- 2018 292 005

## Beschreibung

Bei Klauenkupplungsgetrieben mit mehr als zwei Gängen und unabhängig voneinander mittels einer Aktorik bewegbaren Schaltgabeln/Schiebemuffen kann es dazu kommen, dass das Getriebe und damit die Räder blockiert werden, weil die Schaltgabeln/Schiebemuffen sehr schnell bewegt werden können und keine Synchronringe das asynchrone Einlegen von Gängen verhindern.

Klassische FSM-Ansätze gehen davon aus, unerwünschte Ansteuerungen oder Bewegungen der Aktorik zu detektieren und als Reaktion die Spannungsversorgung für die betreffende Aktorik abzuschalten.

Aus der DE 10 2008 000 640 A1 ist ein Verfahren zum Sperren von unzulässigen Schaltvorgängen bei einem Getriebe mit mehreren Schalteinrichtungen bekannt. Die Schalteinrichtungen werden zum Durchführen eines Schaltvorganges von Betätigungseinrichtungen bewegt, wenn ein Schaltbefehl von einem Steuergerät an die jeweilige Betätigungseinrichtung ausgegeben wird. Die Betätigungseinrichtungen werden zum Datenaustausch derart untereinander und mit dem Steuergerät verbunden, dass die Ansteuerung der Betätigungseinrichtung der zu schaltenden Schalteinrichtung in Abhängigkeit der Freigabe mindestens einer weiteren Betätigungseinrichtung durchgeführt wird.

Es ist eine Aufgabe der vorliegenden Erfindung, eine verbesserte Anordnung sowie ein verbessertes Verfahren zur Steuerung eines Getriebes, insbesondere eines Klauenkupplungsgetriebes anzugeben.

Die Aufgabe wird gelöst durch eine Anordnung mit den Merkmalen des Anspruchs 1 und durch ein Verfahren mit den Merkmalen des Anspruchs 5.

Vorteilhafte Weiterbildungen sind Gegenstand der Unteransprüche.

Eine erfindungsgemäße Anordnung zum Schalten eines Getriebes umfasst:
- mindestens zwei Leistungsschaltstufen für einen jeweiligen Aktor zum Schalten einer jeweiligen Schaltgabel oder Schiebemuffe des Getriebes zwischen einer Neutralposition und mindestens einer Eingelegt-Position,
- ein Steuergerät zum Ansteuern der Leistungsschaltstufen,
wobei jeder Leistungsschaltstufe eine jeweilige Freigabestufe zugeordnet ist, die die jeweilige Leistungsschaltstufe selektiv mit einer Spannungsversorgung verbindet oder von dieser trennt, wobei die Freigabestufen ebenfalls mit dem Steuergerät verbunden und von diesem mittels Freigabesignalen steuerbar sind, wobei das Steuergerät so konfiguriert ist, dass kein Freigabesignal aktiviert wird oder nur genau ein Freigabesignal aktiviert wird, dessen zugeordneter Aktor in einer aktuellen Fahrsituation funktional sicher betätigbar ist, und wobei ferner jeder Leistungsschaltstufe ein jeweiliger Aktortreiber zugeordnet ist, über den die Leistungsschaltstufe mit dem Steuergerät verbunden ist, wobei das Steuergerät eingerichtet ist, wenn alle Schaltgabeln oder Schiebemuffen in der Neutralposition sind, das Freigabesignal für eine zugeordnete Schaltgabel oder Schiebemuffe einzuschalten, wenn die Drehzahl eines zugeordneten Ganges innerhalb eines vorgegebenen Toleranzfensters synchron mit einer Motordrehzahl eines Antriebsmotors ist.

In einer Ausführungsform sind die Aktoren als Motoren ausgebildet.

Die Anordnung kann zusammen mit einem Getriebe in einem Kraftfahrzeug angeordnet sein.

Das Getriebe kann als ein Klauenkupplungsgetriebe ausgebildet sein.

Bei einem Verfahren zum Betrieb der Anordnung ist oder wird das Freigabesignal eingeschaltet, wenn die zugeordnete Schaltgabel oder Schiebemuffe in einer Eingelegt-Position ist, wobei, wenn alle Schaltgabeln oder Schiebemuffen in der Neutralposition sind, das Freigabesignal für eine zugeordnete Schaltgabel oder Schiebemuffe eingeschaltet wird, wenn die Drehzahl eines zugeordneten Ganges innerhalb eines vorgegebenen Toleranzfensters synchron mit einer Motordrehzahl eines Antriebsmotors ist.

In einer Ausführungsform, insbesondere wenn das Verfahren in einem Kraftfahrzeug durchgeführt wird, wird das Freigabesignal für eine zugeordnete Schaltgabel oder Schiebemuffe ferner eingeschaltet, wenn das Kraftfahrzeug steht und das Einlegen eines Ganges als Parksperre angefordert wird.

In einer Ausführungsform erfolgt ein Gangwechsel, indem ein gerade eingelegter Gang mittels des zugehörigen Aktors ausgelegt wird, während das diesem Aktor zugeordnete Freigabesignal eingeschaltet ist, wobei nach dem Auslegen des Ganges und sobald die Schaltgabel oder Schiebemuffe in der Neutralposition ist, alle Freigabesignale ausgeschaltet werden, wobei eine Drehzahl des Antriebsmotors auf einen einzulegenden Gang innerhalb des Toleranzfensters synchronisiert und das Freigabesignal für den dem einzulegenden Gang zugeordneten Aktor eingeschaltet wird. Der betreffende Gang kann dann mittels Ansteuerung der entsprechenden Leistungsschaltstufe durch das Steuergerät eingelegt werden.

Erfindungsgemäß wird, anstatt auf eine mögliche fehlerhafte Aktuierung zu reagieren, proaktiv nur die Spannungsversorgung zu dem Teil der Aktorik freigeschaltet, der in der jeweiligen Fahrsituation notwendig ist. Alle anderen Zweige der Aktorik sind abgeschaltet. Dies kann sowohl für elektromotorische als auch elektrohydraulische Aktorik Verwendung finden. Mit entsprechender Hard- und Software kann dieses Verfahren bis hin zu ASIL D-Sicherheitszielen eingesetzt werden.

In einer Ausführungsform der Erfindung werden die Schaltgabeln/Schiebemuffen durch eine Rastierung in Eingelegtpositionen und/oder in einer Neutralposition gehalten.

Durch die proaktive Abschaltung ist keine schnelle Überwachung einer fehlerhaften Ansteuerung oder Bewegung notwendig. Dadurch sinken die Anforderungen an die Rechenzeit (Schnelligkeit der Überwachung) und Fehldetektionen sind ausgeschlossen.

Die funktionale Sicherheit in Klauenkupplungsgetrieben kann so verbessert werden.

In einer Ausführungsform kann ein Relais oder ein anderer Leistungsschalter in die Zuleitung zum Aktor integriert werden
Ausführungsbeispiele der Erfindung werden anhand von Zeichnungen näher erläutert. Dabei zeigen:
Figur 1 eine schematische Ansicht einer Anordnung zum Schalten eines Getriebes,
Figur 2 eine schematische Ansicht eines Klauenkupplungsgetriebes, und
Figur 3 eine schematische Ansicht eines Kraftfahrzeugs, umfassend das Klauenkupplungsgetriebe und die Anordnung.

Einander entsprechende Teile sind in allen Figuren mit den gleichen Bezugszeichen versehen.

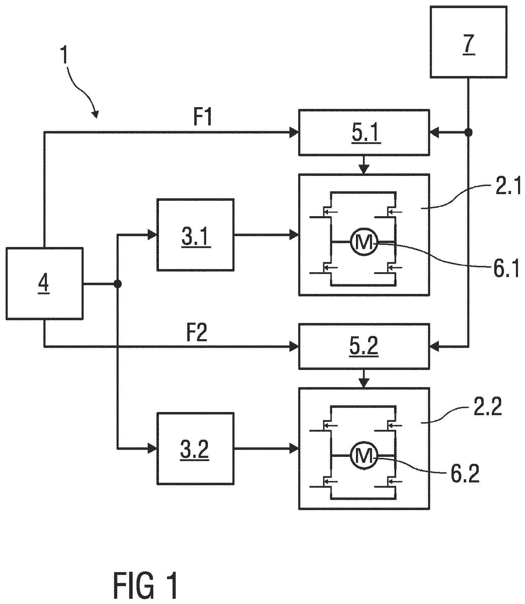

Figur 1 ist eine schematische Ansicht einer Anordnung 1 zum Schalten eines Getriebes, insbesondere eines Klauenkupplungsgetriebes, umfassend eine erste Leistungsschaltstufe 2.1 für einen ersten Aktor 6.1 zum Schalten einer Schaltgabel oder Schiebemuffe eines Klauenkupplungsgetriebes und eine zweite Leistungsschaltstufe 2.2 für einen zweiten Aktor 6.2 zum Schalten einer weiteren Schaltgabel oder Schiebemuffe des Klauenkupplungsgetriebes.

Die Anordnung 1 umfasst ferner einen ersten Aktortreiber 3.1 zum Ansteuern der ersten Leistungsschaltstufe 2.1 und einen zweiten Aktortreiber 3.2 zum Ansteuern der zweiten Leistungsschaltstufe 2.2.

Es kann eine beliebige Anzahl weiterer Leistungsschaltstufen und Aktortreiber für weitere Aktoren zum Schalten weiterer Schaltgabeln oder Schiebemuffen des Klauenkupplungsgetriebes vorgesehen sein. Die Aktoren 6.1, 6.2 können als Motoren ausgebildet sein.

Die Aktortreiber 3.1, 3.2 werden von einem Steuergerät 4 angesteuert, beispielsweise einem Microcontroller.

Jeder Leistungsschaltstufe 2.1, 2.2 ist eine jeweilige Freigabestufe 5.1, 5.2 zugeordnet, die die jeweilige Leistungsschaltstufe 2.1, 2.2 mit einer Spannungsversorgung 7 verbindet oder von dieser trennt. Die Freigabestufen 5.1, 5.2 sind ebenfalls mit dem Steuergerät 4 verbunden und können von diesem mittels Freigabesignalen F1, F2 angesteuert werden.

Ein Verfahren zum Betrieb der Anordnung 1 kann beispielsweise wie folgt vorgesehen sein:
- Wenn ein Gang mittels eines der Aktoren 6.1, 6.2 eingelegt ist, dann bleibt das Freigabesignal F1, F2 für die Freigabestufe 5.1, 5.2 des zu diesem Gang gehörigen Aktors 6.1, 6.2 eingeschaltet. Die entsprechende Leistungsschaltstufe 2.1, 2.2 ist also mit Spannung versorgt, so dass der zugehörige Aktor 6.1, 6.2 bei entsprechender Ansteuerung über den zugehörigen Aktortreiber 3.1, 3.2 jederzeit bewegt werden kann. Das Freigabesignal F1, F2 für die Freigabestufe 5.1, 5.2 des anderen Aktors 6.1, 6.2 oder aller anderen Aktoren ist abgeschaltet, so dass keine Bewegung dieser anderen Aktoren erfolgen kann, selbst dann, wenn, beispielsweise versehentlich, eine Ansteuerung über den zugehörigen Aktortreiber 3.1, 3.2 erfolgen sollte.
- Wenn beide Gangsteller/Schaltgabeln/Schiebemuffen, beispielsweise infolge entsprechender Betätigung eines der Aktoren 6.1, 6.2 in einer Neutralposition sind (kein Gang eingelegt), so können die Freigabesignale F1, F2 für die Freigabestufen 5.1, 5.2 beider Aktoren 6.1, 6.2 oder aller Aktoren abgeschaltet werden, so dass keine Bewegung dieser Aktoren 6.1, 6.2 erfolgen kann, selbst dann, wenn, beispielsweise versehentlich, eine Ansteuerung über den zugehörigen Aktortreiber 3.1, 3.2 erfolgen sollte.
- Ein Freigabesignal F1, F2 für die Freigabestufe 5.1, 5.2 eines der Aktoren 6.1, 6.2 wird unter folgenden Bedingungen eingeschaltet:
   1. Die Fahrzeuggeschwindigkeit ist oberhalb einer vorgegebenen Schwelle und die Drehzahl eines Ganges ist synchron (Abtriebsdrehzahl * Gangübersetzung = Motordrehzahl) innerhalb eines Toleranzfensters, und/oder
   2. Das Fahrzeug steht und ein Gang wird als Parksperre angefordert.

Jeder Aktor 6.1, 6.2 kann zur Betätigung einer Schaltgabel/Schiebemuffe vorgesehen sein, mittels derer zwei verschiedene Gänge eingelegt werden können.

Wenn beide oder alle Schaltgabeln/Schiebemuffen in einer Neutralstellung sind, so dass kein Gang eingelegt ist, so wird das Freigabesignal F1, F2 erteilt, wenn die Drehzahl des betreffenden Ganges synchron innerhalb des Toleranzfensters ist.

Wenn eine der Schaltgabeln/Schiebmuffen in einer eingelegten Position ist, so kann das Freigabesignal F1, F2 des betreffenden Aktors 6.1, 6.2 eingeschaltet bleiben, da das Auslegen des betreffenden Ganges nicht zu einem kritischen Zustand führt.

Da zu jedem Zeitpunkt nur ein Gang synchron innerhalb des Toleranzfensters sein kann, wird auch nur der jeweils zugeordnete Aktor 6.1, 6.2 bestromt.

Bei einem Gangwechsel wird zunächst der gerade eingelegte Gang mittels des zugehörigen Aktors 6.1, 6.2 ausgelegt. Währenddessen ist das diesem Aktor 6.1, 6.2 zugeordnete Freigabesignal F1, F2 eingeschaltet. Nach dem Auslegen des Ganges und sobald die Schaltgabel/Schiebmuffe in Neutralstellung ist, werden die Freigabesignale F1, F2 beider oder aller Aktoren 6.1, 6.2 ausgeschaltet, so dass keiner der Aktoren 6.1, 6.2 betätigt werden kann. Eine Drehzahl des Antriebsmotors wird auf den als nächstes einzulegenden Gang synchronisiert und das Freigabesignal F1, F2 für den dem einzulegenden Gang zugeordneten Aktor 6.1, 6.2 wird eingeschaltet, so dass dieser Aktor 6.1, 6.2 betätigt werden kann.

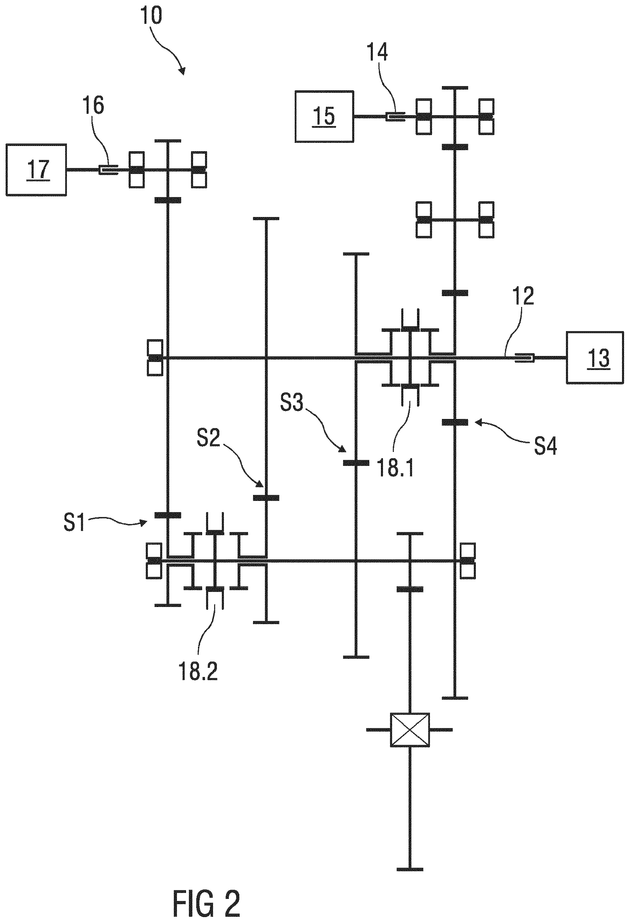

Figur 2 ist eine schematische Ansicht eines beispielhaften Klauenkupplungsgetriebes 10, beispielsweise eines dedicated hybrid transmission (DHT).

Das Klauenkupplungsgetriebe 10 hat eine erste Eingangswelle 12, die mit einer Verbrennungskraftmaschine 13 verbunden ist. Eine zweite Eingangswelle 14 des Klauenkupplungsgetriebes 10 kann mit einem ersten elektrischen Antrieb 15 verbunden sein, beispielsweise einem elektrischen Antriebsmotor. Eine dritte Eingangswelle 16 des Klauenkupplungsgetriebes 10 kann mit einem zweiten elektrischen Antrieb 17 verbunden sein, beispielsweise einem Riemen-Startergenerator.

Das Klauenkupplungsgetriebe 10 weist eine Anzahl von Klauenkupplungen 18.1, 18.2 zum Schalten einer Anzahl von Gängen S1 - S4 auf, beispielsweise vier Gänge S1 - S4. Die Klauenkupplungen 18.1, 18.2 können Schaltgabeln/Schiebemuffen aufweisen, die mittels der Aktoren 6.1, 6.2 der oben beschriebenen Anordnung 1 betätigt werden.

Die Schaltgabeln/Schiebemuffen können eine Rastierung aufweisen, mittels derer sie in Eingelegtpositionen und/oder in einer Neutralposition gehalten werden können.

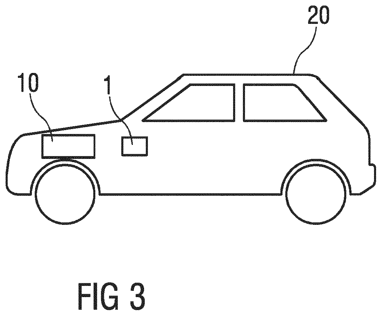

Figur 3 ist eine schematische Ansicht eines Kraftfahrzeugs 20, umfassend das Klauenkupplungsgetriebe 10 und die Anordnung 1.

### Bezugszeichenliste

- 1: Anordnung
- 2.1: erste Leistungsschaltstufe
- 2.2: zweite Leistungsschaltstufe
- 3.1: erster Aktortreiber
- 3.2: zweiter Aktortreiber
- 4: Steuergerät
- 5.1: Freigabestufe
- 5.2: Freigabestufe
- 6.1: erster Aktor
- 6.2: zweiter Aktor
- 7: Spannungsversorgung
- 10: Getriebe, Klauenkupplungsgetriebe
- 12: erste Eingangswelle
- 13: Antriebsmotor, Verbrennungskraftmaschine
- 14: zweite Eingangswelle
- 15: Antriebsmotor, erster elektrischer Antrieb
- 16: dritte Eingangswelle
- 17: Antriebsmotor, zweiter elektrischer Antrieb
- 18.1: Klauenkupplung
- 18.2: Klauenkupplung
- 20: Kraftfahrzeug
- F1, F2: Freigabesignal
- S1 bis S4: Gang

## Patentansprüche

1. Anordnung (1) zum Schalten eines Getriebes (10), wobei die Anordnung (1) umfasst:
- mindestens zwei Leistungsschaltstufen (2.1, 2.2) für einen jeweiligen Aktor (6.1, 6.2) zum Schalten einer jeweiligen Schaltgabel oder Schiebemuffe des Getriebes (10) zwischen einer Neutralposition und mindestens einer Eingelegt-Position,
- ein Steuergerät (4) zum Ansteuern der Leistungsschaltstufen (2.1, 2.2),
wobei jeder Leistungsschaltstufe (2.1, 2.2) eine jeweilige Freigabestufe (5.1, 5.2) zugeordnet ist, die die jeweilige Leistungsschaltstufe (2.1, 2.2) selektiv mit einer Spannungsversorgung (7) verbindet oder von dieser trennt, wobei die Freigabestufen (5.1, 5.2) ebenfalls mit dem Steuergerät (4) verbunden und von diesem mittels Freigabesignalen (F1, F2) steuerbar sind, wobei das Steuergerät (4) so konfiguriert ist, dass kein Freigabesignal (F1, F2) aktiviert wird oder nur genau ein Freigabesignal (F1, F2) aktiviert wird, dessen zugeordneter Aktor (6.1, 6.2) in einer aktuellen Fahrsituation funktional sicher betätigbar ist, und wobei ferner jeder Leistungsschaltstufe (2.1, 2.2) ein jeweiliger Aktortreiber (3.1, 3.2) zugeordnet ist, über den die Leistungsschaltstufe (2.1, 2.2) mit dem Steuergerät (4) verbunden ist,
wobei das Steuergerät eingerichtet ist, wenn alle Schaltgabeln oder Schiebemuffen in der Neutralposition sind, das Freigabesignal (F1, F2) für eine zugeordnete Schaltgabel oder Schiebemuffe einzuschalten, wenn die Drehzahl eines zugeordneten Ganges (S1 bis S4) innerhalb eines vorgegebenen Toleranzfensters synchron mit einer Motordrehzahl eines Antriebsmotors (13, 15, 17) ist.

2. Anordnung (1) nach Anspruch 1, wobei die Aktoren (6.1, 6.2) als Motoren ausgebildet sind.

3. Kraftfahrzeug, umfassend ein Getriebe (10) und eine Anordnung (1) nach einem der vorhergehenden Ansprüche.

4. Kraftfahrzeug nach Anspruch 3 , wobei das Getriebe (10) als ein Klauenkupplungsgetriebe ausgebildet ist.

5. Verfahren zum Betrieb einer Anordnung (1) nach einem der vorhergehenden Ansprüche, wobei das Freigabesignal (F1, F2) eingeschaltet ist oder wird, wenn die zugeordnete Schaltgabel oder Schiebemuffe in einer Eingelegt-Position ist, wobei, wenn alle Schaltgabeln oder Schiebemuffen in der Neutralposition sind, das Freigabesignal (F1, F2) für eine zugeordnete Schaltgabel oder Schiebemuffe eingeschaltet wird, wenn die Drehzahl eines zugeordneten Ganges (S1 bis S4) innerhalb eines vorgegebenen Toleranzfensters synchron mit einer Motordrehzahl eines Antriebsmotors (13, 15, 17) ist.

6. Verfahren nach Anspruch 5, durchgeführt in einem Kraftfahrzeug, wobei das Freigabesignal (F1, F2) für eine zugeordnete Schaltgabel oder Schiebemuffe ferner eingeschaltet wird, wenn das Kraftfahrzeug steht und das Einlegen eines Ganges (S1 bis S4) als Parksperre angefordert wird.

7. Verfahren nach einem der Ansprüche 5 oder 6, wobei für einen Gangwechsel ein gerade eingelegter Gang (S1 bis S4) mittels des zugehörigen Aktors (6.1, 6.2) ausgelegt wird während das diesem Aktor (6.1, 6.2) zugeordnete Freigabesignal (F1, F2) eingeschaltet ist, wobei nach dem Auslegen des Ganges (S1 bis S4) und sobald die Schaltgabel oder Schiebmuffe in der Neutralposition ist, alle Freigabesignale (F1, F2) ausgeschaltet werden, wobei eine Drehzahl des Antriebsmotors (13, 15, 17) auf einen einzulegenden Gang (S1 bis S4) innerhalb des Toleranzfensters synchronisiert und das Freigabesignal (F1, F2) für den dem einzulegenden Gang (S1 bis S4) zugeordneten Aktor (6.1, 6.2) eingeschaltet wird.

## Claims

1. Arrangement (1) for shifting a transmission (10), wherein the arrangement (1) comprises:
- at least two power switching stages (2.1, 2.2) for a respective actuator (6.1, 6.2) for shifting a respective shift fork or sliding sleeve of the transmission (10) between a neutral position and at least one engaged position,
- a control device (4) for actuating the power switching stages (2.1, 2.2),
wherein each power switching stage (2.1, 2.2) is assigned a respective enable stage (5.1, 5.2) that selectively connects or disconnects the respective power switching stage (2.1, 2.2) to or from a voltage supply (7), wherein the enable stages (5.1, 5.2) are likewise connected to the control device (4) and are able to be controlled thereby by means of enable signals (F1, F2), wherein the control device (4) is configured in such a way that no enable signal (F1, F2) is activated or only exactly one enable signal (F1, F2) is activated, the assigned actuator (6.1, 6.2) of which is able to be actuated in a functionally safe manner in a current driving situation, and wherein each power switching stage (2.1, 2.2) is also assigned a respective actuator driver (3.1, 3.2), via which the power switching stage (2.1, 2.2) is connected to the control device (4),
wherein the control device is designed, if all the shift forks or sliding sleeves are in the neutral position, to switch on the enable signal (F1, F2) for an assigned shift fork or sliding sleeve if the rotational speed of an assigned gear (S1 to S4) is synchronous with a motor rotational speed of a drive motor (13, 15, 17) within a predefined tolerance window.

2. Arrangement (1) according to Claim 1, wherein the actuators (6.1, 6.2) are in the form of motors.

3. Motor vehicle, comprising a transmission (10) and an arrangement (1) according to either of the preceding claims.

4. Motor vehicle according to Claim 3, wherein the transmission (10) is in the form of a dog-clutch transmission.

5. Method for operating an arrangement (1) according to one of the preceding claims, wherein the enable signal (F1, F2) is or has been switched on if the assigned shift fork or sliding sleeve is in an engaged position, wherein, if all the shift forks or sliding sleeves are in the neutral position, the enable signal (F1, F2) for an assigned shift fork or sliding sleeve is switched on if the rotational speed of an assigned gear (S1 to S4) is synchronous with a motor rotational speed of a drive motor (13, 15, 17) within a predefined tolerance window.

6. Method according to Claim 5, carried out in a motor vehicle, wherein the enable signal (F1, F2) is also switched on for an assigned shift fork or sliding sleeve if the motor vehicle is at a standstill and the engagement of a gear (S1 to S4) as a parking brake is required.

7. Method according to either of Claims 5 and 6, wherein, for a gear change, a currently engaged gear (S1 to S4) is disengaged by means of the assigned actuator (6.1, 6.2) while the enable signal (F1, F2) assigned to this actuator (6.1, 6.2) is switched on, wherein, after the gear (S1 to S4) has been disengaged and as soon as the shift fork or sliding sleeve is in the neutral position, all the enable signals (F1, F2) are switched off, wherein a rotational speed of the drive motor (13, 15, 17) is synchronized to a gear (S1 to S4) to be engaged within the tolerance window and the enable signal (F1, F2) for the actuator (6.1, 6.2) assigned to the gear (S1 to S4) to be engaged is switched on.

## Revendications

1. Arrangement (1) de changement de rapport d'une boîte de vitesses (10), l'arrangement (1) comprenant :
- au moins deux étages de commutation de puissance (2.1, 2.2) pour un actionneur (6.1, 6.2) respectif servant à commuter une fourchette de boîte de vitesses respective ou un manchon coulissant de la boîte de vitesses (10) entre une position neutre et au moins une position engagée,
- un contrôleur (4) destiné à commander les étages de commutation de puissance (2.1, 2.2),
chaque étage de commutation de puissance (2.1, 2.2) étant associé un étage de libération (5.1, 5.2) respectif qui relie sélectivement l'étage de commutation de puissance (2.1, 2.2) respectif à une alimentation électrique (7) ou le déconnecte de celle-ci, les étages de libération (5.1, 5.2) étant également reliés au contrôleur (4) et pouvant être commandés par celui-ci au moyen de signaux de libération (F1, F2), le contrôleur (4) étant configuré de telle sorte qu'aucun signal de libération (F1, F2) n'est activé ou qu'un seul signal de libération (F1, F2) est activé, dont l'actionneur (6.1, 6.2) associé peut être actionné de manière fonctionnellement sûre dans une situation de conduite actuelle, et en outre, à chaque étage de commutation de puissance (2.1, 2.2) étant associé un circuit de pilotage d'actionneur (3.1, 3.2) respectif par le biais duquel l'étage de commutation de puissance (2.1, 2.2) est relié au contrôleur (4),
le contrôleur étant conçu pour, lorsque toutes les fourchettes de boîte de vitesse ou manchons coulissants se trouvent dans la position neutre, mettre en circuit le signal de libération (F1, F2) pour une fourchette de boîte de vitesse ou un manchon coulissant associé, lorsque la vitesse de rotation d'un rapport (S1 à S4) associé est synchrone avec une vitesse de rotation de moteur d'un moteur d'entraînement (13, 15, 17) à l'intérieur d'une fenêtre de tolérance prédéfinie.

2. Arrangement (1) selon la revendication 1, les actionneurs (6.1, 6.2) étant réalisés sous forme de moteurs.

3. Véhicule automobile comprenant une boîte de vitesses (10) et un arrangement (1) selon l'une des revendications précédentes.

4. Véhicule automobile selon la revendication 3, la boîte de vitesses (10) étant réalisée sous la forme d'une boîte de vitesses à accouplement à griffes.

5. Procédé pour faire fonctionner un arrangement (1) selon l'une des revendications précédentes, le signal de libération (F1, F2) étant ou devenant mis en circuit lorsque la fourchette de boîte de vitesses ou le manchon coulissant associé se trouve dans une position engagée, et lorsque toutes les fourchettes de boîte de vitesse ou tous les manchons coulissants se trouve dans la position neutre, le signal de libération (F1, F2) pour une fourchette de boîte de vitesses ou un manchon coulissant associé étant activé lorsque la vitesse de rotation d'un rapport (S1 à S4) associé est synchrone avec une vitesse de rotation de moteur d'un moteur d'entraînement (13, 15, 17) à l'intérieur d'une fenêtre de tolérance prédéfinie.

6. Procédé selon la revendication 5, mis en œuvre dans un véhicule automobile, le signal de libération (F1, F2) pour une fourchette de boîte de vitesse ou un manchon coulissant associé étant en outre mis en circuit lorsque le véhicule automobile est à l'arrêt et que l'engagement d'un rapport (S1 à S4) est demandé en tant que blocage de stationnement.

7. Procédé selon l'une des revendications 5 ou 6, avec lequel, pour un changement de rapport, un rapport (S1 à S4) qui vient d'être engagé est désengagé au moyen de l'actionneur (6.1, 6.2) associé pendant que le signal de libération (F1, F2) associé à cet actionneur (6.1, 6.2) est mis en circuit, tous les signaux de libération (F1, F2) étant mis hors circuit après le désengagement du rapport (S1 à S4) et dès que la fourchette de boîte de vitesses ou le manchon coulissant se trouve en position neutre, une vitesse de rotation de moteur du moteur d'entraînement (13, 15, 17) étant synchronisée sur un rapport (S1 à S4) à engager au sein de la fenêtre de tolérance et le signal de libération (F1, F2) pour l'actionneur (6.1, 6.2) associé au rapport (S1 à S4) à engager étant mis en circuit.
